# EUROPEAN PATENT APPLICATION

(11) **EP 4 601 284 A1**
(43) Date of publication of application: **13.08.2025**
(21) Application number: 25157376.2
(22) Date of filing: 12.02.2025
(51) Int. Cl.: H04N 5/77, H04N 7/18, H04N 21/231

(54) **VIDEO ANALYTICS, SCENE-BASED CAMERA TO RECORDER LOAD BALANCING**

(30) Priority: 12.02.2024 US 202418438972
(71) Applicant: Tyco Fire & Security GmbH, 8212 Neuhausen am Rheinfall (CH)
(72) Inventor: FEE, Paul, 8212 Neuhausen am Rheinfall (CH); NEILL, Terence, 8212 Neuhausen am Rheinfall (CH)
(74) Representative: Meissner Bolte Nürnberg

(57) **Abstract**

A method and apparatus for performing a load balancing assignment of a set of cameras having different camera specifications to a set of recorders having different recorder specifications/ The aspects include determining a set of load balancing factors configured to match the cameras in the set of cameras to the recorders in the set of recorders responsive to scene analysis information. The set of load balancing factors include at least a camera scene importance. The aspects include assigning one or more of the cameras in the set to record to one or more of the recorders in the set responsive to the set of load balancing factors and the set of recorder specifications. The aspects include recording, by the one or more of the recorders, video information from a corresponding one of the one or more cameras based on the assigning of one or more of the cameras to record to the one or more of the recorders.

## Description

### TECHNICAL FIELD

Aspects of the present disclosure relate generally to camera and/or video recording systems, and, more particularly, to a video analytics, scene-based camera to recorder load balancing.

### BACKGROUND

Large scale close circuit television (CCTV) installations will involve numerous camera and multiple recorders. Each camera is assigned to a recorder, where the video stream is recorded to disk. Automated load balancing aims to eliminate the manual assignment of cameras to recorders. However, some basis for the automated load balancing is needed to ensure optimal load balancing between cameras and recorders.

### SUMMARY

The following presents a simplified summary of one or more aspects to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects in a simplified form as a prelude to the more detailed description that is presented later.

Embodiments according to the invention are defined in the appended claims. According to aspects of the present disclosure, a method is provided for performing a load balancing assignment of a set of cameras having different camera specifications to a set of recorders having different recorder specifications. In an aspect, the method includes determining a set of load balancing factors configured to match the cameras in the set of cameras to the recorders in the set of recorders responsive to scene analysis information. The set of load balancing factors include at least a camera scene importance. In an aspect, the method includes assigning one or more of the cameras in the set to record to one or more of the recorders in the set responsive to the set of load balancing factors and the set of recorder specifications. In an aspect, the method includes recording, by the one or more of the recorders, video information from a corresponding one of the one or more cameras based on the assigning of one or more of the cameras to record to the one or more of the recorders.

According to other aspects of the present disclosure, an apparatus is provided. In an aspect, the apparatus includes one or more memories. In an aspect, the apparatus further includes one or more processors coupled with the one or more memories. The one or more processors are configured, individually or in combination, to perform a load balancing assignment of a set of cameras having different camera specifications to a set of recorders having different recorder specifications.

According to yet other aspects of the present disclosure, a computer-readable medium is provided having instructions stored thereon. The instructions are executable by one or more processors, individually or in combination, to perform a load balancing assignment of a set of cameras having different camera specifications to a set of recorders having different recorder specifications.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which.
**FIG. 1** is a block diagram of an example of a computer environment, in accordance with example aspects of this disclosure.
**FIG. 2** is a block diagram of an example camera-to-recorder assignment system, in accordance with an exemplary aspect.
**FIG. 3** is a block diagram of example computer code stored in cache of a computer, in accordance with example aspects of this disclosure.
**FIG. 4** is a block diagram of an example of camera scene importance load balancing factor (LBF), in accordance with example aspects of this disclosure.
**FIG. 5** is a block diagram of an example scenario, in accordance with example aspects of this disclosure.
**FIG. 6** is a flow diagram of a method for performing a load balancing assignment of a set of cameras having different camera specifications to a set of recorders having different recorder specifications, in accordance with example aspects of the present disclosure.
**FIGS. 7-11** is a flow diagram of a block of the method of **FIG. 6****,** in accordance with example aspects of the present disclosure.
**FIG. 12** is a flow diagram of another block of the method of **FIG. 6****,** in accordance with example aspects of the present disclosure.
**FIG. 13** is a flow diagram of additional features of the method of **FIG. 6****,** in accordance with example aspects of the present disclosure.

### DETAILED DESCRIPTION

Aspects of the present disclosure are directed to a video analytics, scene-based camera to recorder load balancing. As used herein, load balancing refers to the matching of camera specifications to recorder specifications in the assignment of specific cameras to specific recorders. The matching may be based on one or more of a variety of factors referred to herein as load balancing factors. In an aspect, load balancing factors may include, but are not limited to, bandwidth, camera scene importance, storage redundancy, activity level, object proximity, and any other metric that may serve as a guide to control where data from a camera may be stored.

Aspects of the present disclosure are directed to scenarios involving a large number of cameras distributed across a number of recorders, wherein at least some of the recorders having different specifications (e.g., storage capacity, storage redundancy, battery life, and so forth). In an aspect, at least some of the cameras have different specifications (e.g., resolution, frame rate, on-board light source, and so forth).

Aspects of the present disclosure enable the balancing of camera output load across a number of recorders having different specifications using scene analysis. Scene analysis can offer more appropriate camera to recorder assignment than a naive approach. For instance, a scene value may be associated with a scene, wherein the scene value is higher for a more important area, a more active area, or an area having activity of more interest, relative to other areas of lesser importance, lesser activeness, or activities of lesser interest. As such, aspects of the present disclosure may utilize scene analysis and/or scene value to make assignments of storage of information recorded by a camera.

For example, consider a casino with cameras covering high value camera scenes, such as gaming tables and pay out windows, and other less important areas such as corridors. Automatic classification of camera scene importance can affect load balancing, such as assigning scene values to higher specification recorders (e.g., recorders having higher storage capacity, more storage redundancy, longer battery life, and so forth relative to similar features of other recorders) or ensuring that high value camera scenes are not inadvertently recorded on a small set of recorders (as increasing the number of recorders reduces the impact of a recorder failure). Such increase in the number of recorders can relate to redundancy such that multiple recorders may be used to record a same or similar scene. A similar scene to a first scene is one that captures the same objects as the first scene, but with a different camera perspective. It is to be appreciated that similar scenes may show the same objects with different amounts of occlusion.

In an aspect, artificial intelligence may be used to classify a camera scene. In an aspect, the artificial intelligence may be edge-based, e.g., a machine learning model/neural network operating on the camera, on the recorder, and/or offloaded to an analytics engine located remotely across a network. In an aspect, a separate neural network is used for each load balancing factor. For example, in an aspect, a separate neural network is used for each of bandwidth, camera scene importance, storage redundancy, activity level, object proximity, and so forth.

In an aspect, a learning approach is used, where the error value of one or more neural networks is continually reduced due to feedback from prior object and/or load balancing factor estimates.

In an aspect, the camera scene classification may then then used to influence assignment of a camera to one of a number of available recorders with different specifications (e.g., storage capacity, storage redundancy, battery life, and so forth).

In an aspect, camera scene importance may be determined as a load balancing factor and used to selectively assign different cameras to different recorders. Camera scene importance may be determined based on object occurrence (detection) and object importance. In an aspect, object importance may be determined by matching a currently detected object against a database of known objects of varying degrees of assigned importance (e.g., using pattern matching). In this way, the specific object importance may be readily determined based on comparison results. Such comparison may be performed by a neural network in order to reduce an identification error to below a threshold value. In an aspect, more than one object of a given type (e.g., cars, people, and so forth) as well as of different types may increase the importance value of a camera scene since more than one object can result in possible object interactions (collisions, conversations, person-on-person crimes, etc.) and thus increased importance warranting increase monitoring.

In an aspect, camera scene importance may include text importance. In an aspect, optical character recognition may be used to identify important text such as STOP, MERGE, WATCH YOUR STEP, and so forth. In an aspect, the text may be adapted to the scene. For example, the scene may be identified as a traffic merge point or traffic flow point involving people and/or vehicles based on the identification of the word MERGE.

In an aspect, camera scene importance may be based on shape recognition such as the various shapes used in traffic and other types of signs. For example, octagons for stop signs and other shapes representative of other expected behaviors and so forth may be identified and a corresponding importance assigned to that (text) object that is used to calculate scene importance. In an aspect, scene importance is calculated directly as the corresponding importance value. In an aspect, scene importance is weighed based on scene context. For example, a parking lot may require less resolution and/or a lower frame rate than an entrance to an airport gate or other typically secured area. Text identification may further reinforce a given shape interpretation (e.g., an octagon and the word STOP may be collectively interpreted to represent a stop sign).

In an aspect, storage redundancy may be used as a load balancing factor that is considered for camera-to-recorder assignment. In this way, for example, high importance scenes may be distributed across multiple recorders, and/or are not all allocated to a single recorder, which can fail.

In an aspect, storage capacity may be used as a load balancing factor that is considered for camera-to-recorder assignment. In this way, high importance scenes are not allocated to recorders having small capacity as switching from recorder to recorder without overlap when recorder capacity is reached may result in missed frames.

In an aspect, activity level in a camera scene may be used as a load balancing factor that is considered for camera-to-recorder assignment. For example, expected or currently static camera scenes may be assigned: a camera that has a low resolution and/or low frame rate and/or no supplemental illumination and/or so forth; and a corresponding recorder that has a low storage capacity, low redundancy, low battery life, and so forth. In contrast, expected or currently dynamic camera scenes may be assigned: a camera that has a high resolution and/or high frame rate and/or supplemental illumination and/or so forth and a corresponding recorder that has a high storage capacity, high redundancy, high battery life, and so forth. Such scenarios that can involve the preceding including store rooms versus shopping spaces in shopping malls.

In an aspect, object proximity may be used as a load balancing factor that is considered for camera-to-recorder assignment. For example, the detection of objects close to each other (e.g., cars, people, items, and so forth) or close to a particular item or set of items (e.g., items typically stolen and requiring increased monitoring) may be weighed more heavily than when objects are farther spaced apart.

These considerations (e.g., camera scene importance, storage redundancy, activity level, object proximity, and so forth) may be combined and/or weighted as separate load balancing factors. In an aspect, the separate load balancing factors are combined in a manner depending on the scenario. The resultant value and/or separate load balancing factors may be mapped to a corresponding one of a plurality of sets of different recorder specifications. The different recorder specifications are specifically tailored to the resultant value and/or separate load balancing factors.

In an aspect, the resultant value may be used for speed in order to quickly and dynamically adapt to different camera recording conditions and/or scenarios.

For example, the resultant value may be compared to a plurality of values in a table and a matching value is used to determine a recorder assignment based on the recorder's specifications. For this and all examples here, while one camera and/or one recorder may be described for the sake of simplicity, more than one camera and more than one recorder may be involved, as the present disclose is particularly directed to scenarios involving a large number of cameras and corresponding available recorders to which the cameras may be assigned.

In an aspect, the separate load balancing factors may be used to dynamically tune the recorder assignment based on specific recorder requirements implicated by specific ones of the load balancing factors.

For example, in a busy transit hub (e.g., railroad station, bus station, airport, traffic merging condition, toll booths, and so forth), shopping mall, and so forth, one or more of the load balancing factors may be weighed more heavily to indicate a need for higher value recorder requirements such as storage capacity, storage redundancy, battery life, etc. In a more static situation and/or one where less monitoring is needed, one or more of the load balancing factors may be weighted less.

In an aspect, a neural network is used to identify objects based on pattern matching. Images may be transformed into strings based on the objects detected therein. For example, different combinations of objects result in different representative strings. In an aspect, the pattern matching may be a comparison of strings, one string representing a current camera scene and other strings representing pre-identified, known scenes. In this way, objects and/or object parts used to detect overall objects may, in turn, be used to determine load balancing factors such as camera scene importance, storage redundancy, activity level, object proximity, etc.

In an aspect, a final scene value may be determined from different combinations of load balancing factors. In an aspect, at least some of the load balancing factors are repeated in the different combinations to cover a myriad of combinations for a given load balancing factor with respect to consideration with other load balancing factors.

In an aspect, a set of more than one camera may be assigned to a given scene, where the scene is partitioned into respective regions, with each of the cameras assigned a given region having its own set of load balancing factors that correspond to respective specifications of the assigned cameras. In this way, scene regions can be individually considered for what they represent in terms of monitoring and corresponding recording value and assigned cameras accordingly.

In an aspect, a scene may be evaluated based on storage needed and/or bandwidth consumed and/or any other load balancing factor described herein or combination of load balancing factors. In an aspect, a scene may be reevaluated responsive to a schedule and/or randomly and/or depending on the time of day, day of the week, holiday, sale duration, sale start time, sale end time, and so forth. For example, weekends and holidays at shopping malls may result in a reevaluation of a current load (e.g., number of detected objects) to ensure proper recording coverage given greater numbers of people typically shop on the weekend and on holidays. The same may be applied to a school as far as recording images at a higher resolution and/or higher frame rate and/or with supplemental illumination and/or so forth during school hours than non-school hours. The same may be applied to stadiums where more cameras and corresponding recorders are deployed on game days versus non-game days. This approach can be carried further to stadium gates where everyone can be recorded as they enter (and potentially barred from entry as needed) and may thus be recorded at a high resolution and/or high frame rate and/or so forth, or may even be further carried within other areas of the stadium with other resolutions and/or frame rates depending on expected crime and so forth. In this way, wasting of resources is minimized, with resources instead being utilized efficiently based on dynamically changing conditions/scenarios.

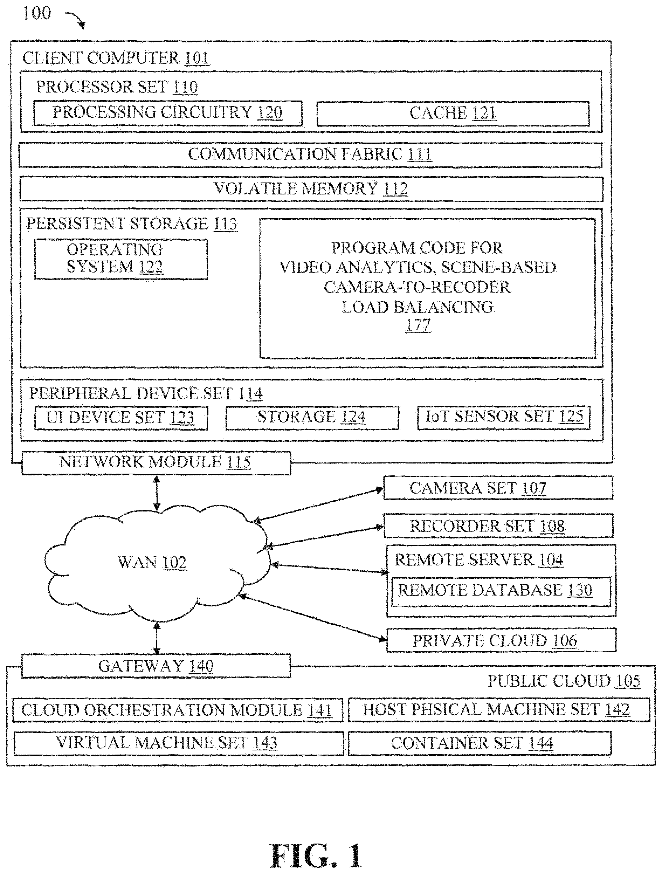

Referring to **FIG. 1****,** an example computing environment 100 is shown, in accordance with an aspect of the present disclosure.

In an aspect, a computing environment having one or more controllers may be used to dynamically assign recorders to cameras. In an aspect, a single controller/server (e.g., one instance of client computer 101 in **FIG. 1****)** is used to make the dynamic assignments. In another aspect, a distributed system (multiple instances of client computer 101 in **FIG. 1****)** may be used to make the dynamic assignments. A distributed system may be segmented based on area of protection (e.g., different areas within a building, a building interior versus a building exterior, and so forth) and/or sets of camera specifications (high quality: high resolution and/or high frame rate and/or supplemental illumination; low quality: low resolution and/or low frame rate and/or no supplemental illumination; intermediate with intermediate resolution and/or intermediate frame rate and optionally intermediate illumination depending upon the illumination scale) and/or sets of recorder specifications (high quality: high capacity and/or high storage redundancy; low quality: low capacity and/or low storage redundancy; intermediate with intermediate capacity and/or intermediate storage redundancy).

In an aspect, the client computer 101 in **FIG. 1****,** as well as other parts of computing environment 100 of **FIG. 1** may be part of a building management system (BMS).

Computing environment 100 is an example of an environment including a client computer 101 configured for the execution of at least some of the computer code 177 involved in performing the methods described herein relating to assigning camera to recorders using scene analysis. A set of cameras 107 and a set of recorders 108 may be integral with, or separate from, the client computer 101. The computing environment 100, in addition to computer code 177, further includes for example, client computer 101, wide area network (WAN) 102, remote server 104, public cloud 105, and private cloud 106. In this aspect, computer 101 includes processor set 110 (including processing circuitry 120 and cache 121), communication fabric 111, volatile memory 112, persistent storage 113 (including operating system 122 and computer code 177, as identified above), peripheral device set 114 (including user interface (UI), device set 123, storage 124, and Internet of Things (IoT) sensor set 125), and network module 115. Remote server 104 includes remote database 130. Public cloud 105 includes gateway 140, cloud orchestration module 141, host physical machine set 142, virtual machine set 143, and container set 144.

Computer 101 may take the form of a desktop computer, laptop computer, tablet computer, smart phone, smart watch or other wearable computer, mainframe computer, quantum computer or any other form of computer or mobile device now known or to be developed in the future that is capable of running a program, accessing a network or querying a database, such as remote database 130. Alternatively, performance of the computer-implemented method(s) described herein may be distributed among multiple computers and/or between multiple locations. For the sake of simplicity, in this presentation of computing environment 100, the following detailed discussion is focused on a single computer, specifically computer 101. Computer 101 may be located in a cloud (e.g., remotely across a network), even though computer 101 is not shown in a cloud in FIG. 1. On the other hand, computer 101 is not required to be in a cloud except to any extent as may be affirmatively indicated.

Processor set 110 includes one or more computer processors of any type. Processing circuitry 120 may be distributed over multiple packages, for example, multiple, coordinated integrated circuit chips. Processing circuitry 120 may implement multiple processor threads and/or multiple processor cores. Cache 121 is memory that is located in the processor chip package(s) and is typically used for data or code that should be available for rapid access by the threads or cores running on processor set 110. Cache memories are typically organized into multiple levels depending upon relative proximity to the processing circuitry. Alternatively, some, or all, of the cache for the processor set may be located "off chip." In some computing environments, processor set 110 may be designed for working with qubits and performing quantum computing.

Computer readable program instructions are typically loaded onto computer 101 to cause a series of operational steps to be performed by processor set 110 of computer 101 and thereby effect a computer-implemented method, such that the instructions thus executed will instantiate the methods specified in flowcharts and/or narrative descriptions of computer-implemented methods included in this document (collectively referred to as "the inventive methods"). These computer readable program instructions are stored in various types of computer readable storage media, such as cache 121 and the other storage media discussed below. The program instructions, and associated data, are accessed by processor set 110 to control and direct performance of the inventive methods. In computing environment 100, at least some of the instructions for performing the inventive methods may be stored in computer code 177 in persistent storage 113.

Communication fabric 111 is the signal conduction paths that allow the various components of computer 101 to communicate with each other. Typically, this fabric is made of switches and electrically conductive paths, such as the switches and electrically conductive paths that make up busses, bridges, physical input / output ports and the like. Other types of signal communication paths may be used, such as fiber optic communication paths and/or wireless communication paths.

Volatile memory 112 is any type of volatile memory now known or to be developed in the future. Examples include dynamic type random access memory (RAM) or static type RAM. Typically, the volatile memory is characterized by random access, but this is not required unless affirmatively indicated. In computer 101, the volatile memory 112 is located in a single package and is internal to computer 101, but, alternatively or additionally, the volatile memory may be distributed over multiple packages and/or located externally with respect to computer 101. Relating to an online aspect, volatile memory 112 may include a first buffer 112A for collecting input samples and a second buffer 112B for outputting the processed audio.

Persistent storage 113 is any form of non-volatile storage for computers that is now known or to be developed in the future. The non-volatility of this storage means that the stored data is maintained regardless of whether power is being supplied to computer 101 and/or directly to persistent storage 113. Persistent storage 113 may be a read only memory (ROM), but typically at least a portion of the persistent storage allows writing of data, deletion of data and re-writing of data. Some familiar forms of persistent storage include magnetic disks and solid state storage devices. Operating system 122 may take several forms, such as various known proprietary operating systems or open source Portable Operating System Interface type operating systems that employ a kernel. The computer code 177 includes at least some of the computer code involved in performing the inventive methods.

Peripheral device set 114 includes the set of peripheral devices of computer 101. Data communication connections between the peripheral devices and the other components of computer 101 may be implemented in various ways, such as Bluetooth connections, Near-Field Communication (NFC) connections, connections made by cables (such as universal serial bus (USB) type cables), insertion type connections (for example, secure digital (SD) card), connections made though local area communication networks and even connections made through wide area networks such as the internet. In various aspects, UI device set 123 may include components such as one or more of a display screen, speaker, microphone array, wearable devices (such as goggles and smart watches), keyboard, mouse, printer, touchpad, virtual reality goggles, augmented reality goggles, mixed reality goggles, game controllers, a voice user interface (VUI), an automatic speech recognition system (ASR), a text-to-speech (TTS) system, cameras, and haptic devices. Storage 124 is external storage, such as an external hard drive, or insertable storage, such as an SD card. Storage 124 may be persistent and/or volatile. In some aspects, storage 124 may take the form of a quantum computing storage device for storing data in the form of qubits. In aspects where computer 101 is required to have a large amount of storage (for example, where computer 101 locally stores and manages a large database) then this storage may be provided by peripheral storage devices designed for storing very large amounts of data, such as a storage area network (SAN) that is shared by multiple, geographically distributed computers. IoT sensor set 125 is made up of one or more sensors that can be used in Internet of Things applications. For example, one sensor may be a thermometer and another sensor may be a motion detector.

Further regarding peripheral device set 114, the same is emphasized to include sets of cameras 107 and sets of recorders 108 that may be dynamically assigned to the sets of cameras 107. In an aspect, the cameras 107 are CCTV cameras. It is to be appreciated that the aspects of the present disclosure can be applied to any type of camera and recoding system deploying cameras and recorders of varying specifications.

Network module 115 is the collection of computer software, hardware, and firmware that allows computer 101 to communicate with other computers through WAN 102. Network module 115 may include hardware, such as modems or Wi-Fi signal transceivers, software for packetizing and/or de-packetizing data for communication network transmission, and/or web browser software for communicating data over the internet. In some aspects, network control functions and network forwarding functions of network module 115 are performed on the same physical hardware device. In other aspects (for example, aspects that utilize software-defined networking (SDN)), the control functions and the forwarding functions of network module 115 are performed on physically separate devices, such that the control functions manage several different network hardware devices. Computer readable program instructions for performing the inventive methods can typically be downloaded to computer 101 from an external computer or external storage device through a network adapter card or network interface included in network module 115.

WAN 102 is any wide area network (for example, the internet) capable of communicating computer data over non-local distances by any technology for communicating computer data, now known or to be developed in the future. In some aspects, the WAN may be replaced and/or supplemented by local area networks (LANs) designed to communicate data between devices located in a local area, such as a Wi-Fi network. The WAN and/or LANs typically include computer hardware such as copper transmission cables, optical transmission fibers, wireless transmission, routers, firewalls, switches, gateway computers and edge servers.

Remote server 104 is any computer system that serves at least some data and/or functionality to computer 101. Remote server 104 may be controlled and used by the same entity that operates computer 101. Remote server 104 represents the machine(s) that collect and store helpful and useful data for use by other computers, such as computer 101.

Public cloud 105 is any computer system available for use by multiple entities that provides on-demand availability of computer system resources and/or other computer capabilities, especially data storage (cloud storage) and computing power, without direct active management by the user. Cloud computing typically leverages sharing of resources to achieve coherence and economies of scale. The direct and active management of the computing resources of public cloud 105 is performed by the computer hardware and/or software of cloud orchestration module 141. The computing resources provided by public cloud 105 are typically implemented by virtual computing environments that run on various computers making up the computers of host physical machine set 142, which is the universe of physical computers in and/or available to public cloud 105. The virtual computing environments (VCEs) typically take the form of virtual machines from virtual machine set 143 and/or containers from container set 144. It is understood that these VCEs may be stored as images and may be transferred among and between the various physical machine hosts, either as images or after instantiation of the VCE. Cloud orchestration module 141 manages the transfer and storage of images, deploys new instantiations of VCEs and manages active instantiations of VCE deployments. Gateway 140 is the collection of computer software, hardware, and firmware that allows public cloud 105 to communicate through WAN 102.

Public cloud 105 may provide a subscription service for people interaction to a plurality of users such as a user of computer 101. The service can have multiple purposes for people interaction. Such purposes for people interaction can include dating, friendship, and business.

In an aspect, public cloud 105 operates in conjunction with remote server 104 to enable profile information of users to be retrieved and provided to a user such as one using computer 101 and/or another user operating a similar device as computer 101.

Private cloud 106 is similar to public cloud 105, except that the computing resources are only available for use by a single enterprise. While private cloud 106 is depicted as being in communication with WAN 102, in other aspects a private cloud may be disconnected from the internet entirely and only accessible through a local/private network. A hybrid cloud is a composition of multiple clouds of different types (for example, private, community or public cloud types), often respectively implemented by different vendors. Each of the multiple clouds remains a separate and discrete entity, but the larger hybrid cloud architecture is bound together by standardized or proprietary technology that enables orchestration, management, and/or data/application portability between the multiple constituent clouds. In this aspect, public cloud 105 and private cloud 106 are both part of a larger hybrid cloud.

Computing environment 100 is presented to emphasize the computing devices involved in controlling the assignment of recorders 108 to cameras 107 in accordance with aspects of the present disclosure.

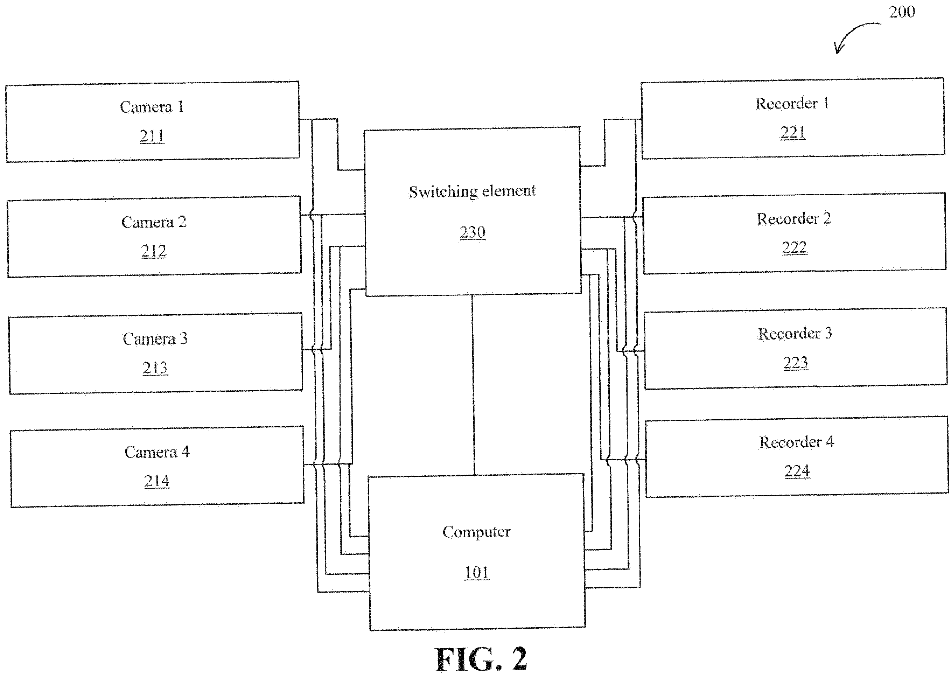

Referring to **FIG. 2****,** an example camera-to-recorder assignment system 200 is shown, in accordance with an exemplary aspect.

The camera-to-recorder assignment system 200 include cameras 1-4 211-214, recorders 1-4 221-224, switching element 230, and computer 101.

Cameras 1-4 211-214 may be closed circuit television (CCTV) or other type of camera. Cameras 1-4 211-214 may form a set of cameras having different specifications. The different specifications may include, but are not limited to, different resolutions, different frame rates, local memory capacity, local memory usage, having or lacking supplemental illumination, and so forth.

Recorders 1-4 221-224 may form a set of recorders having different specifications. The different specifications may include different storage capacities, different storage redundancies, and so forth. Different storage redundancies may include redundant array of inexpensive disks (RAID) or other data duplication techniques in order to preserve data in the face of at least a partial failure of a recorder.

Switching element 230 is connected to the cameras 1-4 211-214 and the recorders 1-4 221-224 for implementing camera-to-recorder assignments based on scene analysis and other load balancing factors computed by the computer 101. To that end, computer 101 is connected to each of cameras 1-4 211-214 to perform scene analysis on the cameras' output, while computer 101 is also connected to each of recorders 1-4 221-224 to obtain current capacity and other operating parameters. Switching element 230 controls the assignment of the cameras 1-4 211-214 to the recorders 1-4 221-224.

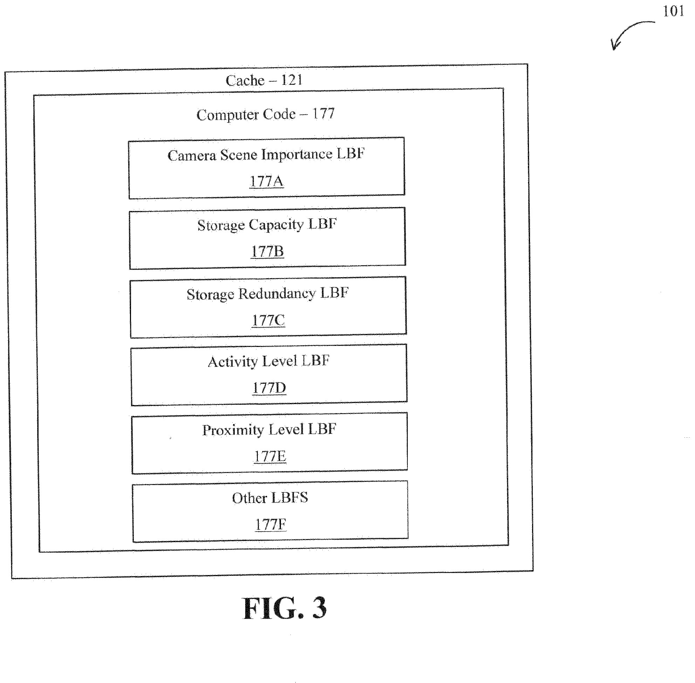

Referring to **FIG. 3****,** example computer code 177 stored in cache 121 of computer 101 is shown, in accordance with an exemplary aspect.

The computer code 177 includes one or more of a camera scene importance load balancing factor (LBF) 177A, a storage capacity LBF 177B, a storage redundancy LBF 177C, an object activity LBF 177D, an object proximity LBF 177E, and other LBFs 177FE. The camera scene importance LBF 177A represents an importance of a scene relative to other scenes. The storage capacity LBF 177B represents an amount of that potential storage that would be consumed by storing a current scene or set of scenes. The storage redundancy LBF 177C represents an amount and/or type of storage redundancy implicated by a given scene such as duplicating data in redundant partitions, and so forth. The object activity LBF 177D represents an amount of object activity with a given frame. The object proximity LBF 177E represents a measure of closeness of objects within a scene and may be weighted higher for scenes where objects that should be spaced apart by a given distance are not so spaced part.

In an aspect, a single LBF may be used for camera-to-recorder assignment.

In an aspect, one or more LBFs may be used for camera-to-recorder assignment. In an aspect, one or more LBFs are used per level in a tiered approach. For example, in an aspect, camera scene importance LBF 177A or some other LBF may be used alone or may be used, for example in a first tier of a hierarchical LBF configuration. In other aspects, other LBFs may be included (e.g., in a second tier) such as storage capacity 177B and/or storage redundancy 177C. While both mentioned in the second tier, storage capacity 177B and storage redundancy 177C may be separated in other aspects into the second tier and the third tier, with the following tiers each shifted by one. In an aspect, further LBFs may be included (e.g., in a third tier or in separate tiers) such as object activity LBF 177D and/or object proximity LBF 177E. In an aspect, other LBFs 177F may be included (e.g., in a fourth or other tier).

It is to be appreciated that the LBFs 177A-177E/F may be combined and/or weighted in any manner. For example, in any aspect, simple addition, or weighted addition, may be used. In an aspect, any of addition, subtraction multiplication, division, and exponent may be used to combine two or more LBFs.

In any aspect, different methods of combining are used for different tiers. For example, in any aspect, one or more of any of addition, subtraction, multiplication, division, and exponent may be used for one tier and the same or other ones or more of addition, subtraction, multiplication, division, and exponent may be used for a second tier, and so on. In an aspect, each tier, has its own method with or without overlap as to mathematical operators depending upon the implementation. In an aspect, each tier corresponds to a single LBF. In other aspects, other variations are possible.

While shown separately, in other aspects, object activity LBF 177D and/or object proximity LBF 177E may be included in camera scene importance LBF 177A.

Object activity LBF 177D and/or object proximity LBF 177E are separated from camera scene importance LBF 177A in some aspects to allow object activity LBF 177D and/or object proximity LBF 177E to be specifically addressed given a particular scenario to which they could apply or a particular affect they may have. For example, object activity being high may result in a high object activity LBF value that warrants more storage capacity given a dynamic versus static scene.

The order and weighting of LBF values before, after or during the combining of LBF values, may be tailored to one of a plurality of pre-stored scenarios (e.g., airport, shopping mall, school, intersection, storeroom, shopping floor, and so forth).

In an aspect, the use of a particular subset of LBFs from among a set of LBFs 177A-E may be controlled by the current scenario matching a pre-stored scenario and its corresponding implicated LBFs. For example, scenario A may implicate different LBSs than scenario B, which may then implicate different LBSs than scenario C, and so on. The determination of which LBFs to use may be determined through experimentation initially to identify which LBFs are more prominent in ultimately providing proper camera-to-recorder assignments. Identified subsets of LBFs may be stored for different scenarios (scene arrangements), where a match to a current scene and a pre-stored scene may implicate the same LBFs be currently used as identified and associated with the pre-stored scene.

It is to be appreciated that the determination of which LBFs to use may be determined based on scene analysis where LBFs implicated by a value greater than a respective value are used in camera-to-recorder assignments. For example, for a particular type of LBF typically having a value in a range of 0 to 57, values of the LBF greater than 30 or any other threshold number can be used to ensure that not too many LBFs are considered in aspect requiring speed over precision. In other aspects, more LBFs may be used. For example, in a speed calculation, no more than 2 or 3 LBFs may be used to arrive at a final result versus a precision calculation which may or may not have a limit on the number of LBFs that can be used but such number will be greater than 2 or 3 based on the preceding speed calculation example.

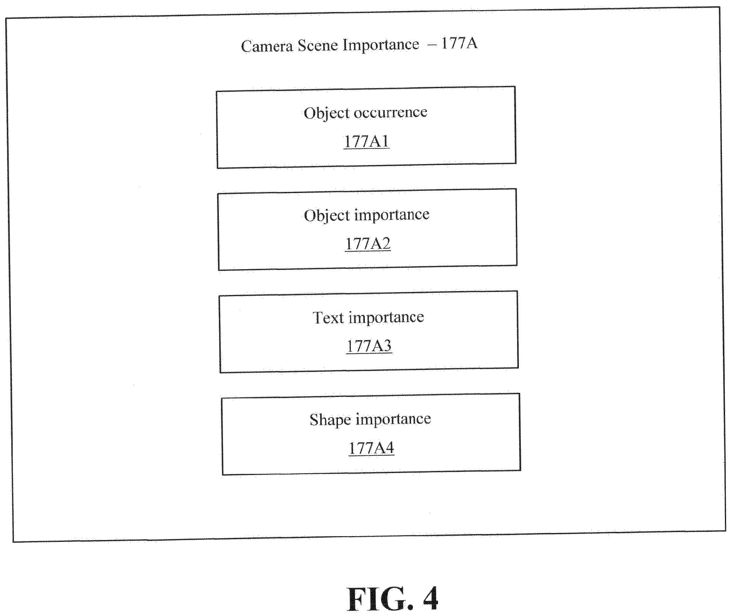

Referring to **FIG. 4****,** an example of camera scene importance LBF 177A is shown, in accordance with an exemplary aspect.

In an aspect, camera scene importance LBF 177A may include one or more factors such as object occurrence LBF 177A1, object importance LBF 177A2, text importance LBF 177A3, and shape importance LBF 177A4.

In an aspect, object occurrence LBF 177A1 may involve a position of an object in a frame (e.g., central and close versus off to the side and far), and/or the relationship of the position of the object in the frame relative to other objects in the frame, and/or the frequency of occurrence of the object, ratio of occurrences of the object to occurrences of all or a subset of objects in the frame, and so forth. For example, for a scene involving 3 lanes of traffic with 1 car per lane (3 cars total) waiting for a traffic light while 2 pedestrians cross in an intersection, an object occurrence LBF 177A1 may involve tracking objects within a certain threshold radius with respect to a specific monitoring point(s) (e.g., the center of the image and/or the center of the center lane and/or a pedestrian(s) and/or car and/or so forth) and logging data about such objects to calculate an object occurrence LBF 177A1. For example, for 2 pedestrians and 3 cars, the values of 2 and 3 may be combined in any manner including addition, subtraction, multiplication, division (e.g., implementing a ratio), and exponent in order to arrive at a LBF 177A1. In an aspect, the resultant value may be used as the object occurrence LBF 177A1. Or, in an aspect, the resultant value may be divided by the number 5 (total number of objects (2 pedestrians and 3 cars) considered in previous step) or by the number of all objects in the frame including static objects such as traffic signals, traffic signs, pedestrian(s) on the sidewalk, and so forth. Or, in an aspect, the resultant value may be multiplied, added, subtracted or made to form an exponent with the number 5 or other number as determined based on the implementation. It comes down to what is important to the evaluation in determining how to combine. To that end, weighting may be used with a weight representing any of: number of all objects; number of objects of a particular type, a combination of the preceding; and so forth. In this way, specific scenes may use different combining methods in order to accurately process a scene again a set of requirements. For example, the set of requirements can be used to obtain higher LBFs of a given type over another, depending upon the implementation.

In an aspect, object importance LBF 177A2 may involve a table and pattern matching where the object is matched to another object and optionally other scenarios and/or frames and pre-assigned importance values are imported for the object being evaluated once a match is determined. Thus, for example, in the preceding 3 car and 2 pedestrian example, the objects are matched, object by object, to objects in reference (pre-known) frames using pattern matching. When a match between a current scene and one of a set of reference scenes is found, then the LBF's assigned to the objects in that reference scenes may be automatically used for the current scene. Object importance initially may be determined based on number of control devices (signs, lights, street markings, etc.) in a given scene for a traffic scene as one example of a type of scene being evaluated. In another scene being evaluated, a bag, separate from any person, may be flagged with a very high value for the object importance LBF 177A2. This may be particularly true if the scene is matched to an airport terminal or train station terminal and so forth.

In an aspect, text importance LBF 177A3 may involve matching text using optical character recognition or other technique to pre-determined textual phrases having pre-assigned importance based on an occurrence of the phrase, a frequency of occurrence of the phrase in a frame, text position, and its use relative to any shapes (e.g., the word "stop" enclosed within an octagon, wherein such a shape is discussed below regarding shape importance). For example, in a given scene, multiple occurrence of the terms "origin", "destination", and so forth may indicate an airport terminal or train station terminal, which may indicate a minimum text importance level given the security typically employed at terminals such as airport or train terminals. In other aspects, the occurrence of certain textual phrases (e.g., "stop") being presented relative to a given shape (e.g., octagon) may indicate a stop sign, and thus a valued target for a traffic enforcement scenario.

In an aspect, shape importance LBF 177A4 may involve recognition of shapes (e.g., cars, people, and so forth), a frequency of occurrence of shapes, a relation of shape positions to other shape positions (car moving toward a person (pedestrian), warranting also scene importance (object positions) and storage redundancy (object/scene importance), and relationship of shapes to text (e.g., the word "stop" enclosed within an octagon, and so forth). In an aspect, multiple occurrences of certain shapes (yield sign triangle shapes, traffic light shapes, etc.) may implicate certain values for shape importance LBF 177A4 to indicate a high traffic area and thus a likely valued target for a traffic enforcement scenario. In the example above, multiple car shapes moving towards a pedestrian shape may represent a scene having a high shape importance LBF 177A4. The opposite scenario (multiple car shapes moving away from a pedestrian shape) in another frame may represent a scene having a low shape importance LBF 177A4. LBF sub-result values be mapped to frequency of shapes, relation of shape positions to other shape positions, relationship of shapes to text, and so forth. These sub-result values may be combined in any way including all or some subject to any of the following example operations: multiplication; division; addition; subtraction; and exponent.

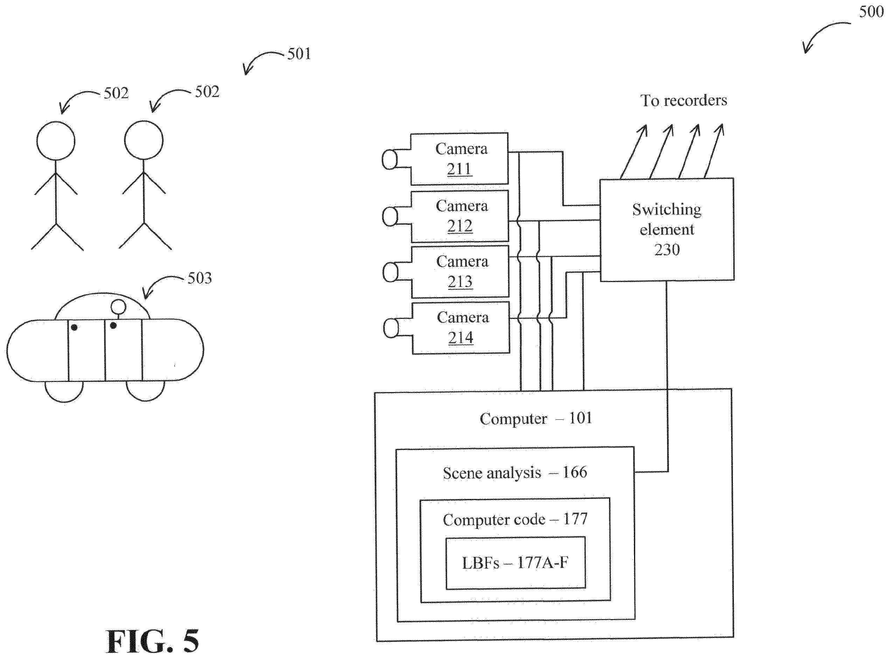

Referring to **FIG. 5****,** an example scenario 500 is shown, in accordance with an exemplary aspect. Scenario 500 corresponds to scene 501 showing people 502 and vehicle 503. Scene 501 and objects therein (people 502 and vehicle 503) are matched to pre-known scenes with pre-known objects having associations to various ones of LBFs 177A-F.

Scene analysis is performed on scene 501 by processing camera outputs fed to computer 101. The scene analysis element 166 controls the switching element 230 to control camera-to-recorder assignments responsive to a scene analysis of scene 501. In this way, camera-to-recorder assignments can be made scene-specific and be specifically tailored to objects and other features of the scene 501. Thus, for example, a scene having one or more LBFs with a high value(ss) or a final resultant LBF with a high value, then a recorder with perhaps greater storage capacity and/or greater storage redundancy may be selected over other records having less storage capacity and/or less storage redundancy.

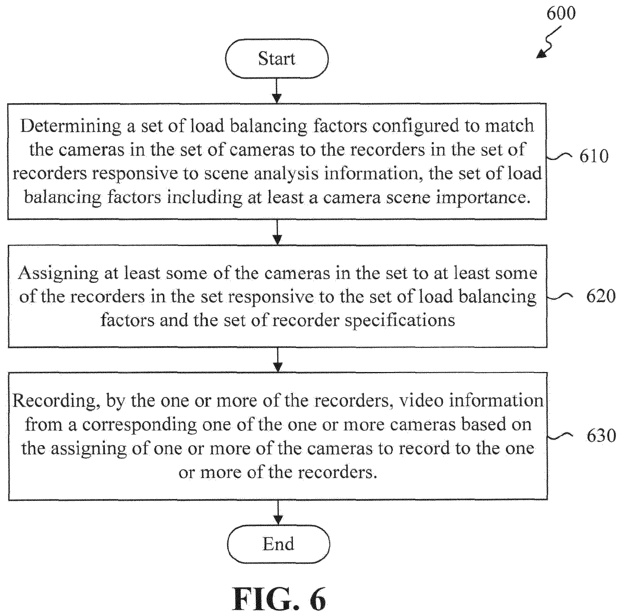

Referring now to **FIG. 6****,** a method 600 for performing a load balancing assignment of a set of cameras having different camera specifications to a set of recorders having different recorder specifications is shown, in accordance with example aspects of the present disclosure.

Method 600 may be performed by one or more processors (e.g., processor set 110 of **FIG. 1****)** operatively coupled to one or more memories (e.g., persistent storage 113 of **FIG. 1****).** The method 600 may be implemented, in part, by computer code (e.g., computer code 177 of **FIG. 1****).**

At block 610, the method 600 includes determining a set of load balancing factors configured to match the cameras in the set of cameras to the recorders in the set of recorders responsive to scene analysis information. The set of load balancing factors include at least a camera scene importance.

At block 620, the method 600 includes assigning at least some of the cameras in the set to at least some of the recorders in the set responsive to the set of load balancing factors and the set of recorder specifications.

At block 630, the method 600 includes recording, by the one or more of the recorders, video information from a corresponding one of the one or more cameras based on the assigning of one or more of the cameras to record to the one or more of the recorders.

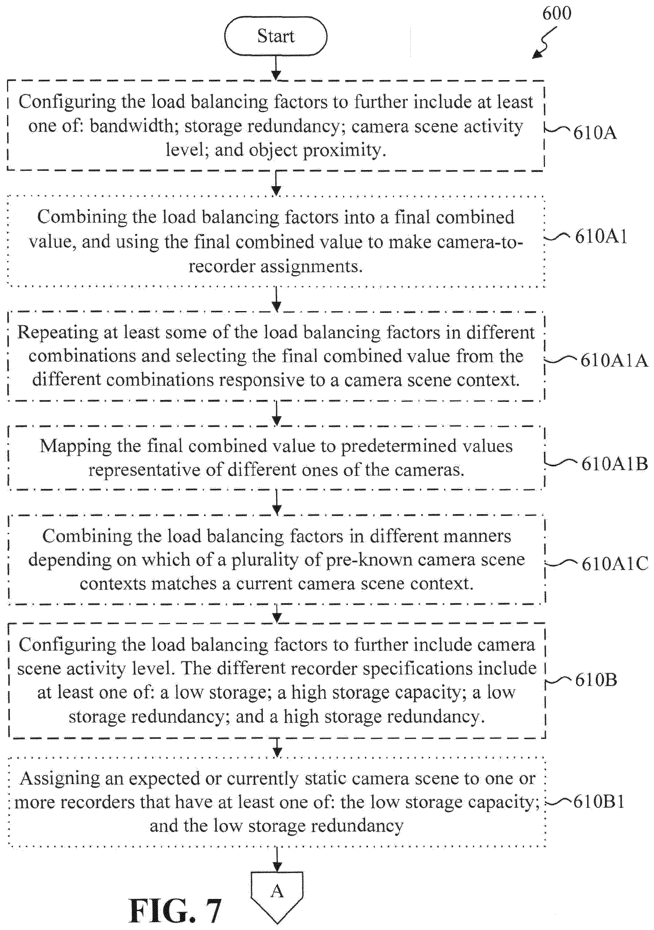

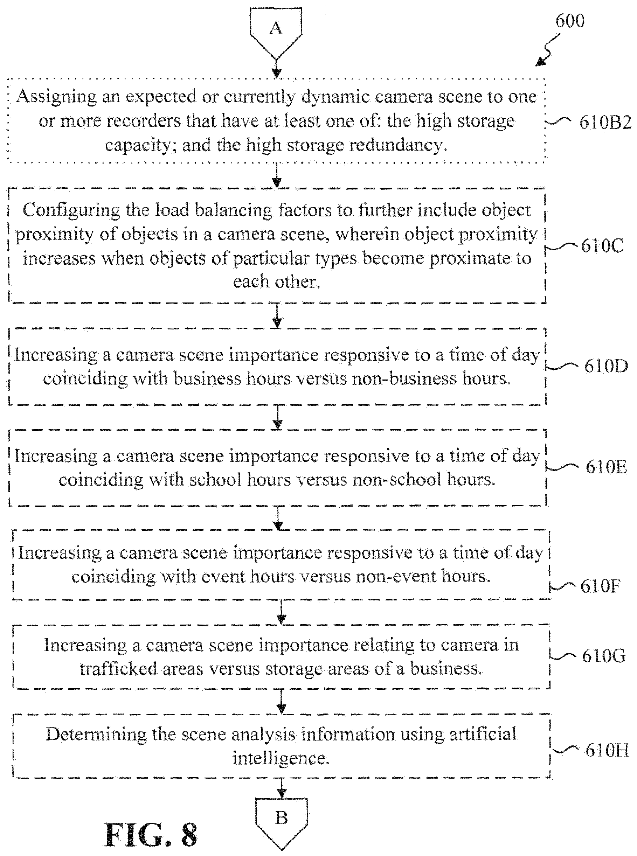

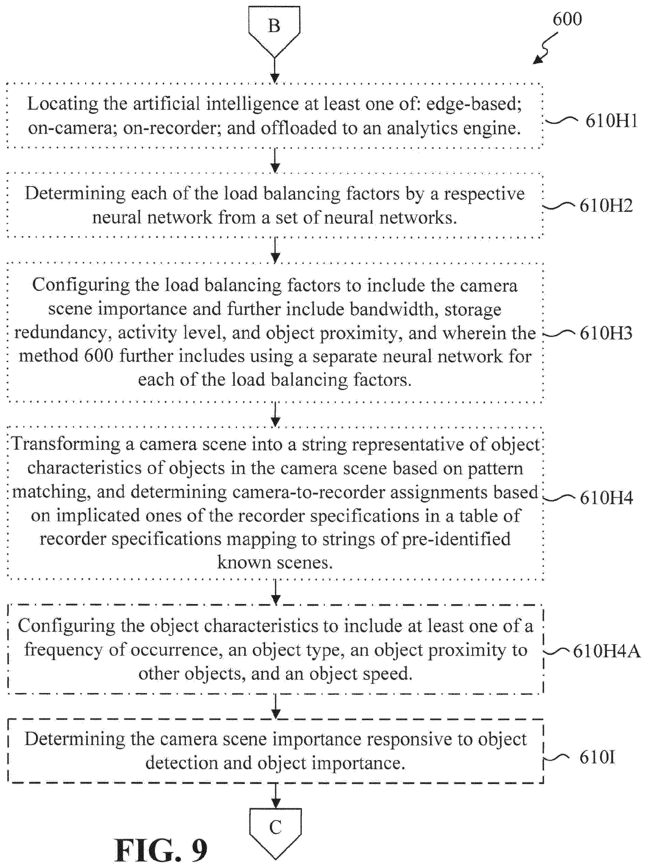

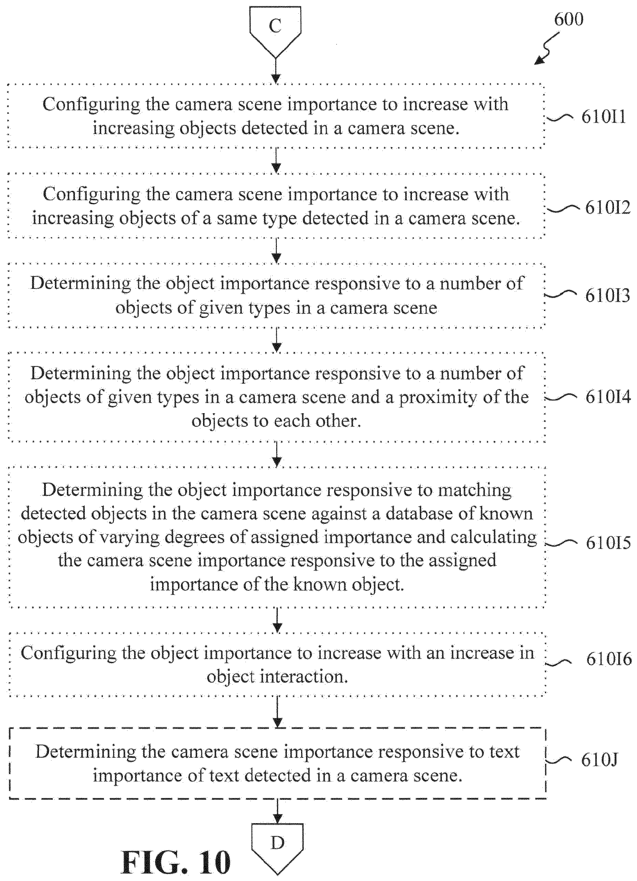

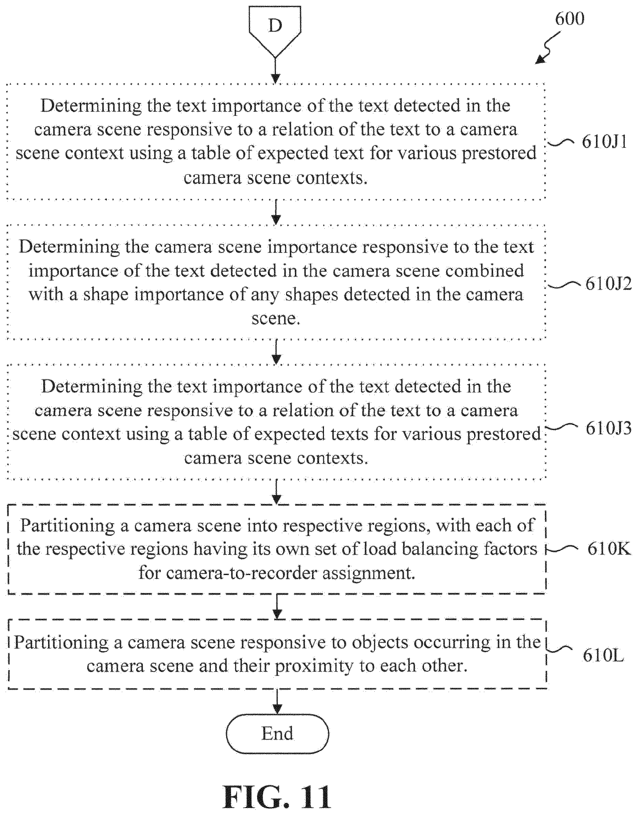

Referring now to **FIGS. 7-11****,** block 610 of method 600 is further shown, in accordance with example aspects of the present disclosure.

In an aspect, block 610 may include one or more of blocks 610A through 610L.

At block 610A, the method 600 includes configuring the load balancing factors to further include at least one of: bandwidth; storage redundancy; camera scene activity level; and object proximity.

In an aspect, block 610A may include block 610A1.

At block 610A1, the method 600 includes combining the load balancing factors into a final combined value, and using the final combined value to make camera-to-recorder assignments. As mentioned above, any two or more LBFs may be combined using any of multiplication, division, addition, subtraction, and exponent. In an aspect, different combinations of LBF's are combined in different ways (for example, some using addition, others using subtraction, etc.). In an aspect, scene mapping may be used to match scene to essentially identical reference scenes having pre-combined LBF values ready to use for camera-to-recorder assignment.

In an aspect, block 610A1 may include one or more of blocks 610A1A through 610A1C.

At block 610A1A, the method 600 includes repeating at least some of the load balancing factors in different combinations and selecting the final combined value from the different combinations responsive to a camera scene context. For example, a combination of LBF values that leads to a minimum error value relative to other combinations may be used. In an aspect, the error may be judged relative to past performance of camera-to-recorder assignments and their levels of success (e.g., error levels). In this way, optimum camera-to-recorder assignments can be made.

At block 610A1B, the method 600 includes mapping the final combined value to predetermined values representative of different ones of the cameras. For example, a scene having a final combined LBF value of X may incur an assignment of a camera of lower capacity and/or lower storage redundancy than another scene having a final combined LBF value of X plus Y, where X and Y are integers.

At block 610A1C, the method 600 includes combining the load balancing factors in different manners depending on which of a plurality of pre-known camera scene contexts matches a current camera scene context.

At block 610B, the method 600 includes configuring the load balancing factors to further include camera scene activity level. The different recorder specifications include at least one of: a low storage; a high storage capacity; a low storage redundancy; and a high storage redundancy.

In an aspect, block 610B may include block 610B1 and 610B2.

At block 610B 1, the method 600 includes assigning an expected or currently static camera scene to one or more recorders that have at least one of: the low storage capacity; and the low storage redundancy.

At block 610B2, the method 600 includes assigning an expected or currently dynamic camera scene to one or more recorders that have at least one of: the high storage capacity; and the high storage redundancy.

At block 610C, the method 600 includes configuring the load balancing factors to further include object proximity of objects in a camera scene, wherein object proximity increases when objects of particular types become proximate to each other. For example, when objects and/or people are close to each other within respective threshold distances, object proximity may increase the close the objects become over time.

At block 610D, the method 600 includes increasing a camera scene importance responsive to a time of day coinciding with business hours versus non-business hours.

At block 610E, the method 600 includes increasing a camera scene importance responsive to a time of day coinciding with school hours versus non-school hours.

At block 610F, the method 600 includes increasing a camera scene importance responsive to a time of day coinciding with event hours versus non-event hours.

At block 610G, the method 600 includes increasing a camera scene importance relating to camera in trafficked areas versus storage areas of a business.

At block 610H, the method 600 includes determining the scene analysis information using artificial intelligence. For example, in an aspect, scene importance may be determined by matching a current scene against a database of known scenes of varying degrees of assigned importance (e.g., using pattern matching on the overall scene and/or on objects depicted in the scene). In this way, the specific scene importance may be readily determined based on comparison results. Such comparison may be performed by a neural network in order to reduce an identification error to below a threshold value and/or to continually reduce the error over time. The neural network is configured to process an input image against a database of known images in order to find a match by a degree of certainty indicative of an error measure of the match. As new (current) images become added to the database of known images, the neural network can then learn the new images based on the error measure of matches between the new images and the existing known images. In this way, the neural network can be made to continually improve and learn over time.

In an aspect, block 610H may include one or more of blocks 610H1 through 610H4.

At block 610H1, the method 600 includes locating the artificial intelligence at least one of: edge-based; on-recorder; and offloaded to an analytics engine.

At block 610H2, the method 600 includes determining each of the load balancing factors by a respective neural network from a set of neural networks.

At block 610H3, the method 600 includes configuring the load balancing factors to include the camera scene importance and further include bandwidth, storage redundancy, activity level, and object proximity, and wherein the method 600 further includes using a separate neural network for each of the load balancing factors.

At block 610H4, the method 600 includes transforming a camera scene into a string representative of object characteristics of objects in the camera scene based on pattern matching, and determining camera-to-recorder assignments based on implicated ones of the recorder specifications in a table of recorder specifications mapping to strings of pre-identified known scenes.

In an aspect, block 610H4 may include block 610H4A.

At block 610H4A, the method includes configuring the object characteristics to include at least one of a frequency of occurrence, an object type, an object proximity to other objects, and an object speed.

At block 6101, the method 600 includes determining the camera scene importance responsive to object detection and object importance.

In an aspect, block 6101 may include one or more of blocks 61011 through 61016.

At block 61011, the method 600 includes configuring the camera scene importance to increase with increasing objects detected in a camera scene.

At block 610I2, the method 600 includes configuring the camera scene importance to increase with increasing objects of a same type detected in a camera scene.

At block 610I3, the method 600 includes determining the object importance responsive to a number of objects of given types in a camera scene.

At block 610I4, the method 600 includes determining the object importance responsive to a number of objects of given types in a camera scene and a proximity of the objects to each other.

At block 610I5, the method 600 includes determining the object importance responsive to matching detected objects in the camera scene against a database of known objects of varying degrees of assigned importance and calculating the camera scene importance responsive to the assigned importance of the known object.

At block 610I6, the method 600 includes configuring the object importance to increase with an increase in object interaction.

At block 610J, the method 600 includes determining the camera scene importance responsive to text importance of text detected in a camera scene.

In an aspect, block 610J may include one or more of blocks 610J1 through 610J3.

At block 610J1, the method 600 includes determining the text importance of the text detected in the camera scene responsive to a relation of the text to a camera scene context using a table of expected text for various prestored camera scene contexts.

At block 610J2, the method 600 includes determining the camera scene importance responsive to the text importance of the text detected in the camera scene combined with a shape importance of any shapes detected in the camera scene.

At block 610J3, the method 600 includes determining the text importance of the text detected in the camera scene responsive to a relation of the text to a camera scene context using a table of expected texts for various prestored camera scene contexts.

At block 610K, the method 600 includes partitioning a camera scene into respective regions, with each of the respective regions having its own set of load balancing factors for camera-to-recorder assignment.

At block 610L, the method 600 includes partitioning a camera scene responsive to objects occurring in the camera scene and their proximity to each other.

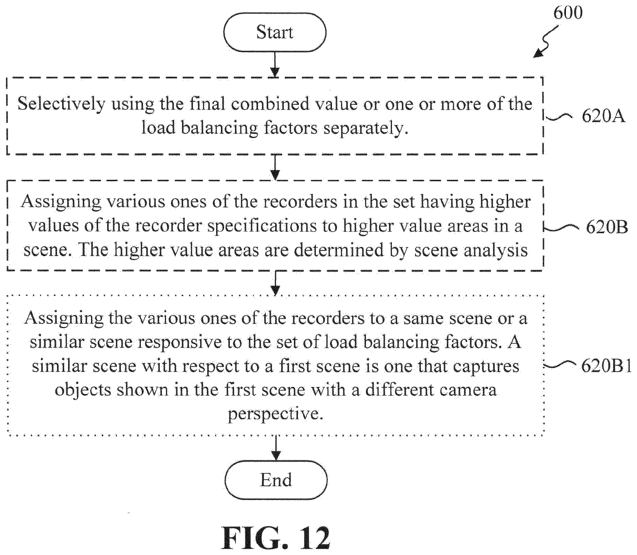

Referring now to **FIG. 12****,** block 620 of method 600 is further shown, in accordance with example aspects of the present disclosure.

In an aspect, block 620 may include one or more of blocks 620A through 620E.

At block 620A, the method 600 includes selectively using the final combined value or one or more of the load balancing factors separately.

At block 620B, the method 600 includes assigning various ones of the recorders in the set having higher values of the recorder specifications to higher value areas in a scene. The higher value areas are determined by scene analysis.

In an aspect, block 620B may include block 620B1.

At block 620B1, the method includes assigning the various ones of the recorders to a same scene or a similar scene responsive to the set of load balancing factors. A similar scene with respect to a first scene is one that captures objects shown in the first scene with a different camera perspective.

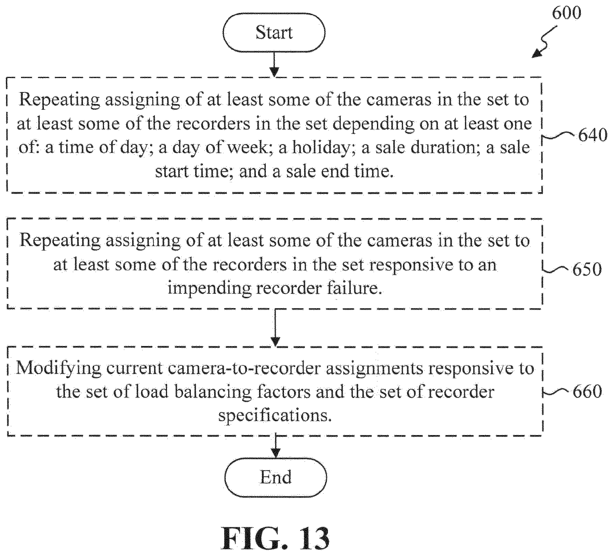

Referring now to **FIG. 13****,** additional features of method 600 are further shown, in accordance with example aspects of the present disclosure.

At block 640, the method 600 includes repeating assigning of at least some of the cameras in the set to at least some of the recorders in the set depending on at least one of: a time of day; a day of week; a holiday; a sale duration; a sale start time; and a sale end time.

At block 650, the method 600 includes repeating assigning of at least some of the cameras in the set to at least some of the recorders in the set responsive to an impending recorder failure.

At block 660, the method 600 includes modifying current camera-to-recorder assignments responsive to the set of load balancing factors and the set of recorder specifications.

Additional aspects of the present disclosure may include one or more of the following clauses.

Clause 1. A method for performing a load balancing assignment of a set of cameras having different camera specifications to a set of recorders having different recorder specifications, the method comprising: determining a set of load balancing factors configured to match the cameras in the set of cameras to the recorders in the set of recorders responsive to scene analysis information, the set of load balancing factors including at least a camera scene importance; assigning one or more of the cameras in the set to record to one or more of the recorders in the set responsive to the set of load balancing factors and the set of recorder specifications; and recording, by the one or more of the recorders, video information from a corresponding one of the one or more cameras based on the assigning of one or more of the cameras to record to the one or more of the recorders.

Clause 2. The method in accordance with clause 1, further comprising configuring the load balancing factors to further include at least one of: bandwidth; storage redundancy; camera scene activity level; and object proximity.

Clause 3. The method in accordance with any preceding clauses, further comprising combining the load balancing factors into a final combined value, and using the final combined value to make camera-to-recorder assignments.

Clause 4. The method in accordance with any preceding clauses, further comprising repeating at least some of the load balancing factors in different combinations and selecting the final combined value from the different combinations responsive to a camera scene context.

Clause 5. The method in accordance with any preceding clauses, further comprising mapping the final combined value to predetermined values representative of different ones of the cameras.

Clause 6. The method in accordance with any preceding clauses, wherein assigning at least some of the cameras in the set to at least some of the recorders in the set comprises selectively using the final combined value or one or more of the load balancing factors separately.

Clause 7. The method in accordance with any preceding clauses, further comprising combining the load balancing factors in different manners depending on which of a plurality of pre-known camera scene contexts matches a current camera scene context.

Clause 8. The method in accordance with any preceding clauses, further comprising configuring the load balancing factors to further include camera scene activity level, and wherein the different recorder specifications include at least one of: a low storage; a high storage capacity; a low storage redundancy; and a high storage redundancy.

Clause 9. The method in accordance with any preceding clauses, further comprising assigning an expected or currently static camera scene to one or more recorders that have at least one of: the low storage capacity; and the low storage redundancy.

Clause 10. The method in accordance with any preceding clauses, further comprising assigning an expected or currently dynamic camera scene to one or more recorders that have at least one of: the high storage capacity; and the high storage redundancy.

Clause 11. The method in accordance with any preceding clauses, further comprising configuring the load balancing factors to further include object proximity of objects in a camera scene, wherein object proximity increases when objects of particular types become proximate to each other.

Clause 12. The method in accordance with any preceding clauses, further comprising increasing a camera scene importance responsive to a time of day coinciding with business hours versus non-business hours.

Clause 13. The method in accordance with any preceding clauses, further comprising increasing a camera scene importance responsive to a time of day coinciding with school hours versus non-school hours.

Clause 14. The method in accordance with any preceding clauses, further comprising increasing a camera scene importance responsive to a time of day coinciding with event hours versus non-event hours.

Clause 15. The method in accordance with any preceding clauses, further comprising increasing a camera scene importance relating to camera in trafficked areas versus storage areas of a business.

Clause 16. The method in accordance with any preceding clauses, wherein the different camera specifications include at least one of different resolutions, different frame rates, and a presence or an absence of an on-board light source.

Clause 17. The method in accordance with any preceding clauses, wherein the different recorder specifications include at least one of a storage capacity and a storage redundancy.

Clause 18. The method in accordance with any preceding clauses, further comprising assigning various ones of the recorders in the set having higher values of the recorder specifications to higher value areas in a scene, the higher value areas determined by scene analysis.

Clause 19. The method in accordance with any preceding clauses, wherein assigning various ones of the recorders in the set comprises assigning the various ones of the recorders to a same scene or a similar scene responsive to the set of load balancing factors, wherein the similar scene with respect to a first scene is one that captures objects shown in the first scene with a different camera perspective.

Clause 20. The method in accordance with any preceding clauses, further comprising determining the scene analysis information using artificial intelligence.

Clause 21. The method in accordance with any preceding clauses, further comprising configuring the artificial intelligence to be located at least one of: edge-based; on-recorder; and offloaded to an analytics engine.

Clause 22. The method in accordance with any preceding clauses, further comprising determining each of the load balancing factors by a respective neural network from a set of neural networks.

Clause 23. The method in accordance with any preceding clauses, further comprising configuring the load balancing factors to include the camera scene importance and further include bandwidth, storage redundancy, activity level, and object proximity, and wherein the method further comprises using a separate neural network for each of the load balancing factors.

Clause 24. The method in accordance with any preceding clauses, further comprising: transforming a camera scene into a string representative of object characteristics of objects in the camera scene based on pattern matching; and determining camera-to-recorder assignments based on implicated ones of the recorder specifications in a table of recorder specifications mapping to strings of pre-identified known scenes.

Clause 25. The method in accordance with any preceding clauses, further comprising configuring the object characteristics to include at least one of a frequency of occurrence, an object type, an object proximity to other objects, and an object speed

Clause 26. The method in accordance with any preceding clauses, further comprising determining the camera scene importance responsive to object detection and object importance.

Clause 27. The method in accordance with any preceding clauses, further comprising configuring the camera scene importance to increase with increasing objects detected in a camera scene.

Clause 28. The method in accordance with any preceding clauses, further comprising configuring the camera scene importance to increase with increasing objects of a same type detected in a camera scene.

Clause 29. The method in accordance with any preceding clauses, further comprising determining the object importance responsive to a number of objects of given types in a camera scene.

Clause 30. The method in accordance with any preceding clauses, further comprising determining the object importance responsive to a number of objects of given types in a camera scene and a proximity of the objects to each other.

Clause 31. The method in accordance with any preceding clauses, further comprising determining the object importance responsive to matching detected objects in the camera scene against a database of known objects of varying degrees of assigned importance and calculating the camera scene importance responsive to the assigned importance of the known object.

Clause 32. The method in accordance with any preceding clauses, further comprising configuring the object importance to increase with an increase in object interaction.

Clause 33. The method in accordance with any preceding clauses, further comprising determining the camera scene importance responsive to text importance of text detected in a camera scene.

Clause 34. The method in accordance with any preceding clauses, further comprising determining the text importance of the text detected in the camera scene responsive to a relation of the text to a camera scene context using a table of expected text for various prestored camera scene contexts.

Clause 35. The method in accordance with any preceding clauses, further comprising determining the camera scene importance responsive to the text importance of the text detected in the camera scene combined with a shape importance of any shapes detected in the camera scene.

Clause 36. The method in accordance with any preceding clauses, further comprising determining the text importance of the text detected in the camera scene responsive to a relation of the text to a camera scene context using a table of expected texts for various prestored camera scene contexts.

Clause 37. The method in accordance with any preceding clauses, further comprising modifying current camera-to-recorder assignments responsive to the set of load balancing factors and the set of recorder specifications.

Clause 38. The method in accordance with any preceding clauses, further comprising partitioning a camera scene into respective regions, with each of the respective regions having its own set of load balancing factors for camera-to-recorder assignment.

Clause 39. The method in accordance with any preceding clauses, further comprising partitioning a camera scene responsive to objects occurring in the camera scene and their proximity to each other.

Clause 40. The method in accordance with any preceding clauses, further comprising repeating assigning of at least some of the cameras in the set to at least some of the recorders in the set depending on at least one of: a time of day; a day of week; a holiday; a sale duration; a sale start time; and a sale end time.

Clause 41. The method in accordance with any preceding clauses, further comprising repeating assigning of at least some of the cameras in the set to at least some of the recorders in the set responsive to an impending recorder failure.

Clause 42. An apparatus, comprising: one or more memories; one or more processors coupled with the one or more memories, wherein the one or more processors are configured, individually or in combination, to perform the method of any one of clauses 1 to 41.

Clause 43. A computer-readable medium having instructions stored thereon, wherein the instructions are executable by one or more processors, individually or in combination, to perform the method of any one of clauses 1 to 41.

Various aspects of the disclosure may take the form of an entirely or partially hardware aspect, an entirely or partially software aspect, or a combination of software and hardware. Furthermore, as described herein, various aspects of the disclosure (e.g., systems and methods) may take the form of a computer program product comprising a computer-readable non-transitory storage medium having computer-accessible instructions (e.g., computer-readable and/or computer-executable instructions) such as computer software, encoded or otherwise embodied in such storage medium. Those instructions can be read or otherwise accessed and executed by one or more processors to perform or permit the performance of the operations described herein. The instructions can be provided in any suitable form, such as source code, compiled code, interpreted code, executable code, static code, dynamic code, assembler code, combinations of the foregoing, and the like. Any suitable computer-readable non-transitory storage medium may be utilized to form the computer program product. For instance, the computer-readable medium may include any tangible non-transitory medium for storing information in a form readable or otherwise accessible by one or more computers or processor(s) functionally coupled thereto. Non-transitory storage media can include read-only memory (ROM); random access memory (RAM); magnetic disk storage media; optical storage media; flash memory, and so forth.

Aspects of this disclosure are described herein with reference to block diagrams and flowchart illustrations of methods, systems, apparatuses, and computer program products. It can be understood that each block of the block diagrams and flowchart illustrations, and combinations of blocks in the block diagrams and flowchart illustrations, respectively, can be implemented by computer-accessible instructions. In certain implementations, the computer-accessible instructions may be loaded or otherwise incorporated into a general-purpose computer, a special-purpose computer, or another programmable information processing apparatus to produce a particular machine, such that the operations or functions specified in the flowchart block or blocks can be implemented in response to execution at the computer or processing apparatus.

Unless otherwise expressly stated, it is in no way intended that any protocol, procedure, process, or method set forth herein be construed as requiring that its acts or steps be performed in a specific order. Accordingly, where a process or method claim does not actually recite an order to be followed by its acts or steps, or it is not otherwise specifically recited in the claims or descriptions of the subject disclosure that the steps are to be limited to a specific order, it is in no way intended that an order be inferred, in any respect. This holds for any possible non-express basis for interpretation, including: matters of logic with respect to the arrangement of steps or operational flow; plain meaning derived from grammatical organization or punctuation; the number or type of aspects described in the specification or annexed drawings; or the like.

As used in this disclosure, including the annexed drawings, the terms "component," "module," "system," and the like are intended to refer to a computer-related entity or an entity related to an apparatus with one or more specific functionalities. The entity can be either hardware, a combination of hardware and software, software, or software in execution. One or more of such entities are also referred to as "functional elements." As an example, a component can be a process running on a processor, a processor, an object, an executable, a thread of execution, a program, and/or a computer. For example, both an application running on a server or network controller, and the server or network controller can be a component. One or more components can reside within a process and/or thread of execution and a component can be localized on one computer and/or distributed between two or more computers. Also, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which parts can be controlled or otherwise operated by program code executed by a processor. As yet another example, a component can be an apparatus that provides specific functionality through electronic components without mechanical parts, the electronic components can include a processor to execute program code that provides, at least partially, the functionality of the electronic components. As still another example, interface(s) can include I/O components or Application Programming Interface (API) components. While the foregoing examples are directed to aspects of a component, the exemplified aspects or features also apply to a system, module, and similar.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in this specification and annexed drawings should be construed to mean "one or more" unless specified otherwise or clear from context to be directed to a singular form.

In addition, the terms "example" and "such as" and "e.g." are utilized herein to mean serving as an instance or illustration. Any aspect or design described herein as an "example" or referred to in connection with a "such as" clause or "e.g." is not necessarily to be construed as preferred or advantageous over other aspects or designs described herein. Rather, use of the terms "example" or "such as" or "e.g." is intended to present concepts in a concrete fashion. The terms "first," "second," "third," and so forth, as used in the claims and description, unless otherwise clear by context, is for clarity only and does not necessarily indicate or imply any order in time or space.

The term "processor," as utilized in this disclosure, can refer to any computing processing unit or device comprising processing circuitry that can operate on data and/or signaling. A computing processing unit or device can include, for example, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can include an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. In some cases, processors can exploit nano-scale architectures, such as molecular and quantum-dot based transistors, switches and gates, in order to optimize space usage or enhance performance of user equipment. A processor may also be implemented as a combination of computing processing units.

In addition, terms such as "store," "data store," data storage," "database," and substantially any other information storage component relevant to operation and functionality of a component, refer to "memory components," or entities embodied in a "memory" or components comprising the memory. It will be appreciated that the memory components described herein can be either volatile memory or nonvolatile memory, or can include both volatile and nonvolatile memory. Moreover, a memory component can be removable or affixed to a functional element (e.g., device, server).

Simply as an illustration, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

Various aspects described herein can be implemented as a method, apparatus, or article of manufacture using special programming as described herein. In addition, various of the aspects disclosed herein also can be implemented by means of program modules or other types of computer program instructions specially configured as described herein and stored in a memory device and executed individually or in combination by one or more processors, or other combination of hardware and software, or hardware and firmware. Such specially configured program modules or computer program instructions, as described herein, can be loaded onto a general-purpose computer, a special-purpose computer, or another type of programmable data processing apparatus to produce a machine, such that the instructions which execute on the computer or other programmable data processing apparatus create a means for implementing the functionality of disclosed herein.

The term "article of manufacture" as used herein is intended to encompass a computer program accessible from any non-transitory computer-readable device, carrier, or media. For example, computer readable media can include but are not limited to magnetic storage devices (e.g., hard drive disk, floppy disk, magnetic strips, or similar), optical discs (e.g., compact disc (CD), digital versatile disc (DVD), blu-ray disc (BD), or similar), smart cards, and flash memory devices (e.g., card, stick, key drive, or similar).

The detailed description set forth herein in connection with the annexed figures is intended as a description of various configurations or implementations and is not intended to represent the only configurations or implementations in which the concepts described herein may be practiced. The detailed description includes specific details for the purpose of providing a thorough understanding of various concepts. However, it will be apparent to those skilled in the art that these concepts may be practiced without these specific details or with variations of these specific details. In some instances, well-known components are shown in block diagram form, while some blocks may be representative of one or more well-known components.

The previous description of the disclosure is provided to enable a person skilled in the art to make or use the disclosure. Various modifications to the disclosure will be readily apparent to those skilled in the art, and the common principles defined herein may be applied to other variations without departing from the scope of the disclosure. Furthermore, although elements of the described aspects may be described or claimed in the singular, the plural is contemplated unless limitation to the singular is explicitly stated. Additionally, all or a portion of any aspect may be utilized with all or a portion of any other aspect, unless stated otherwise. Thus, the disclosure is not to be limited to the examples and designs described herein but is to be accorded the widest scope consistent with the principles and novel features disclosed herein.

## Claims

1. A method for performing a load balancing assignment of a set of cameras having different camera specifications to a set of recorders having different recorder specifications, the method comprising:
determining a set of load balancing factors configured to match the cameras in the set of cameras to the recorders in the set of recorders responsive to scene analysis information, the set of load balancing factors including at least a camera scene importance;
assigning one or more of the cameras in the set to record to one or more of the recorders in the set responsive to the set of load balancing factors and the set of recorder specifications; and
recording, by the one or more of the recorders, video information from a corresponding one of the one or more cameras based on the assigning of one or more of the cameras to record to the one or more of the recorders.

2. The method in accordance with claim 1, further comprising configuring the load balancing factors to further include at least one of: bandwidth; storage redundancy; camera scene activity level; and object proximity.

3. The method in accordance with claim 1 or claim 2, further comprising combining the load balancing factors into a final combined value, and using the final combined value to make camera-to-recorder assignments.

4. The method in accordance with any of claims 1 to 3, further comprising at least one of the following features:
(i) repeating at least some of the load balancing factors in different combinations and selecting the final combined value from the different combinations responsive to a camera scene context,
(ii) mapping the final combined value to predetermined values representative of different ones of the cameras,
(iii) wherein assigning at least some of the cameras in the set to at least some of the recorders in the set comprises selectively using the final combined value or one or more of the load balancing factors separately,
(iv) combining the load balancing factors in different manners depending on which of a plurality of pre-known camera scene contexts matches a current camera scene context.

5. The method in accordance with any of the preceding claims, wherein the different recorder specifications include at least one of: a storage capacity, a low storage capacity; a high storage capacity; a storage redundancy, a low storage redundancy; and a high storage redundancy, optionally further comprising configuring the load balancing factors to further include camera scene activity level,
preferably further comprising assigning an expected or currently static camera scene to one or more recorders that have at least one of: the low storage capacity; and the low storage redundancy and/or preferably further comprising assigning an expected or currently dynamic camera scene to one or more recorders that have at least one of: the high storage capacity; and the high storage redundancy.

6. The method in accordance with claim 2 or any claim directly or indirectly dependent on claim 2, further comprising configuring the load balancing factors to further include object proximity of objects in a camera scene, wherein object proximity increases when objects of particular types become proximate to each other.

7. The method in accordance with any of the preceding claims, further comprising increasing a camera scene importance
(i) responsive to a time of day coinciding with business hours versus non-business hours and/or
(ii) responsive to a time of day coinciding with school hours versus non-school hours and/or
(iii) responsive to a time of day coinciding with event hours versus non-event hours and/or
(iv) relating to camera in trafficked areas versus storage areas of a business.

8. The method in accordance with any of the preceding claims, wherein the different camera specifications include at least one of different resolutions, different frame rates, and a presence or an absence of an on-board light source.

9. The method in accordance with any of the preceding claims, further comprising assigning various ones of the recorders in the set having higher values of the recorder specifications to higher value areas in a scene, the higher value areas determined by scene analysis, wherein preferably assigning various ones of the recorders in the set comprises assigning the various ones of the recorders to a same scene or a similar scene responsive to the set of load balancing factors, wherein the similar scene with respect to a first scene is one that captures objects shown in the first scene with a different camera perspective.

10. The method in accordance with any of the preceding claims, further comprising determining the scene analysis information using artificial intelligence,
optionally further comprising at least one of the following features:
(i) configuring the artificial intelligence to be located at least one of: edge-based; on-recorder; and offloaded to an analytics engine,
(ii) determining each of the load balancing factors by a respective neural network from a set of neural networks,
(iii) configuring the load balancing factors to include the camera scene importance and further include bandwidth, storage redundancy, activity level, and object proximity, and wherein the method further comprises using a separate neural network for each of the load balancing factors,
(iv) transforming a camera scene into a string representative of object characteristics of objects in the camera scene based on pattern matching; and
determining camera-to-recorder assignments based on implicated ones of the recorder specifications in a table of recorder specifications mapping to strings of pre-identified known scenes,
preferably further comprising configuring the object characteristics to include at least one of a frequency of occurrence, an object type, an object proximity to other objects, and an object speed.

11. The method in accordance with any of the preceding claims, further comprising determining the camera scene importance responsive to object detection and object importance,
optionally further comprising at least one of the following features:
(i) configuring the camera scene importance to increase with increasing objects detected in a camera scene,
(ii) configuring the camera scene importance to increase with increasing objects of a same type detected in a camera scene,
(iii) determining the object importance responsive to a number of objects of given types in a camera scene,
(iv) determining the object importance responsive to a number of objects of given types in a camera scene and a proximity of the objects to each other,
(v) determining the object importance responsive to matching detected objects in the camera scene against a database of known objects of varying degrees of assigned importance and calculating the camera scene importance responsive to the assigned importance of the known obj ect,
(vi) configuring the object importance to increase with an increase in object interaction.

12. The method in accordance with any of the preceding claims, further comprising determining the camera scene importance responsive to text importance of text detected in a camera scene,
optionally further comprising at least one of the following features:
(i) determining the text importance of the text detected in the camera scene responsive to a relation of the text to a camera scene context using a table of expected text for various prestored camera scene contexts,
(ii) determining the camera scene importance responsive to the text importance of the text detected in the camera scene combined with a shape importance of any shapes detected in the camera scene,
(iii) determining the text importance of the text detected in the camera scene responsive to a relation of the text to a camera scene context using a table of expected texts for various prestored camera scene contexts.

13. The method in accordance with any of the preceding claims, comprising at least one of or an arbitrary combination of any of the following features:
(i) modifying current camera-to-recorder assignments responsive to the set of load balancing factors and the set of recorder specifications,
(ii) partitioning a camera scene into respective regions, with each of the respective regions having its own set of load balancing factors for camera-to-recorder assignment,
(iii) partitioning a camera scene responsive to objects occurring in the camera scene and their proximity to each other,
(iv) repeating assigning of at least some of the cameras in the set to at least some of the recorders in the set depending on at least one of: a time of day; a day of week; a holiday; a sale duration; a sale start time; and a sale end time,
(v) repeating assigning of at least some of the cameras in the set to at least some of the recorders in the set responsive to an impending recorder failure.

14. An apparatus for performing a load balancing assignment of a set of cameras having different camera specifications to a set of recorders having different recorder specifications, comprising:
one or more memories;
one or more processors coupled with the one or more memories, wherein the one or more processors are configured, individually or in combination, to perform a method according to any of the claims 1 to 13
or to perform steps comprising:
determining a set of load balancing factors configured to match the cameras in the set of cameras to the recorders in the set of recorders responsive to scene analysis information, the set of load balancing factors including at least a camera scene importance;
assigning one or more of the cameras in the set to record to one or more of the recorders in the set responsive to the set of load balancing factors and the set of recorder specifications; and
recording, by the one or more of the recorders, video information from a corresponding one of the one or more cameras based on the assigning of one or more of the cameras to record to the one or more of the recorders.

15. A computer-readable medium for performing a load balancing assignment of a set of cameras having different camera specifications to a set of recorders having different recorder specifications, the computer-readable medium having instructions stored thereon, wherein the instructions are executable by one or more processors, individually or in combination, to perform a method according to any of the claims 1 to 13
or to perform a method comprising:
determining a set of load balancing factors configured to match the cameras in the set of cameras to the recorders in the set of recorders responsive to scene analysis information, the set of load balancing factors including at least a camera scene importance;
assigning one or more of the cameras in the set to record to one or more of the recorders in the set responsive to the set of load balancing factors and the set of recorder specifications; and
recording, by the one or more of the recorders, video information from a corresponding one of the one or more cameras based on the assigning of one or more of the cameras to record to the one or more of the recorders.
